# EUROPEAN PATENT APPLICATION

(11) **EP 1 518 763 A1**
(43) Date of publication of application: **30.03.2005**
(21) Application number: 03736269.6
(22) Date of filing: 26.06.2003
(51) Int. Cl.: B60R 21/26

(54) **AIRBAG DEVICE**

(30) Priority: 28.06.2002 JP 2002189555; 05.11.2002 JP 2002320686
(71) Applicant: Daicel Chemical Industries, Ltd., Sakai-shi, Osaka 590-8501 (JP)
(72) Inventor: KATSUDA, Nobuyuki, Himeji-shi, Hyogo 671-1146 (JP); YABUTA, Mikio, Himeji-shi, Hyogo 671-1224 (JP)
(74) Representative: Grünecker, Kinkeldey, Stockmair & Schwanhäusser
(86) International application number: PCT/JP2003/008127
(87) International publication number: WO 2004/002783

(57) **Abstract**

The present invention provides an air bag apparatus in which an amount of a gas flowing into an air bag can be adjusted in a stepless manner.

A pinion 40 is rotated by activating a motor 38 according to an instruction from a control circuit to move a rack 34 straight in a desired direction. By this operation, an amount of a gas flowing into an air bag 14 is adjusted by opening/closing a gas ejecting port 30 provided in a module case 12.

## Description

### Technical Field to which the Invention belongs

The present invention relates to an air bag apparatus which can adjust the maximum inflating pressure in plural steps by adjusting an inflow amount of a gas discharged from an inflator into an air bag in a stepless manner according to various factors such as a sitting attitude of a passenger.

### Prior Art

In an air bag apparatus mounted to an automobile for securing a safety for a passenger, it is important to adjust the maximum inflating pressure of an air bag. For example, when an impact at a time of vehicle collision is small, it is desirable to adjust the maximum inflating pressure of an air bag, so that a pressure at an inflating time of an air bag is suppressed to protect a passenger from the impact and prevent the passenger from being injured by an excessive impact due to inflation of the air bag.

Such an adjustment of the maximum inflating pressure (which is equivalent to a level of a pressure applied at an developing time of an air bag or an amount of a gas flowing into the air bag) is conducted by adjusting an output of an inflator. For example, in a dual type infaltor provided with two igniters and two combustion chambers, an output of the inflator is adjusted by activating only one igniter, activating two igniters simultaneously or staggering activating timings of two igniters according to the magnitude of the impact at a collision, namely according to the magnitude of the impact applied to a passenger.

The dual type inflator is principally intended to suppress an influence to a passenger at the initial developing stage of an air bag, and therefore its object is to adjust a generation amount per unit time of a gas generated from an inflator (for example, the shape and slope of an output curve shown by output/time in a 60-liter tank test) by an ignition time lag between two igniters. When an impact is large, two igniters are activated simultaneously. However, there is not much difference in the maximum outputs of the inflator between a case that the two igniters are simultaneously activated as the above (a case that two gas generating agents are simultaneously burnt) and a case that the two igniters are activated with a time lag. Therefore, the dual type inflator is effective for adjusting a generation amount of a gas per unit time as described above, but there is a limitation in adjusting the maximum output.

For this reason, it is desirable to develop an air bag with an optimal inflating pressure according to various factors such as a siting attitude of a passenger, whether or not a passenger wears a seatbelt, a sitting position of a passenger, a weight of a passenger, an environmental temperature, and a vehicle speed, because a passenger in such circumstances can be held with an optimal restraining strength.

As the prior arts relating to the present invention, US-B 6,142,514, US-B 5,644,802, US-B 4,817,828, and JP-A 8-207696 have been known. According to these arts, the maximum pressure of an inflator can be controlled in two steps, but it is difficult to finely adjust the maximum pressure in a stepless manner and a satisfactory holding performance for a passenger can not be achieved.

### Disclosure of the Invention

An object of the present invention is to provide an air bag apparatus which can protect a passenger properly according to the above-described various factors.

The present invention is aimed at solving the above-described problems by adjusting the maximum inflating pressure of an air bag without changing the maximum output of an inflator itself, namely, while an existing inflator is being used as it is.

The invention described in claim 1 provides an air bag apparatus provided with a module case accommodating an inflator having a gas discharging port and an air bag inflated by a gas discharged from the inflator, and a control circuit connected to the inflator, wherein
the module case is provided with a gas ejecting port for ejecting a gas discharged from the gas discharging port of the inflator outside the module case and an adjusting mechanism (hereinafter, referred to as "a stepless adjusting mechanism") for adjusting opening/closing state of the gas ejecting port in a stepless manner, and the adjusting mechanism can be activated by an instruction from the control circuit.

With such a stepless adjusting mechanism, the maximum inflating pressure of air bag (the maximum amount of a gas flowing into the air bag) can be adjusted in stepless manner while an existing inflator is being used as it is, so that an optimal passenger holding performance corresponding to the above circumstances can be achieved. Further, the present invention can widely and finely adjust the maximum inflating pressure of an air bag combined not only with the above-described dual type inflator but also with an inflator of a single type (provided with one igniter).

In the above-described invention, the adjusting mechanism for adjusting the opening/closing state of the gas ejecting port in a stepless manner can comprise a combination of the gas ejecting port and a valve body for opening/closing the gas ejecting port. Examples of such a combination can be three means such that the valve body moves vertically to the plane of the gas ejecting port, that the valve body moves in parallel to the plane of the gas ej ecting port and that the valve body rotates around the axis on the plane of the gas ejecting port.

In the above-described invention, when the valve body moves vertically to the plane of the gas ejecting port, such a constitution can be employed that the valve body opens and closes the port by a combination of a rack and a pinion. In this combination, the gas ejecting port is opened/closed by the valve body with a rotation of the pinion and a straight motion of the rack interlocked with the rotation.

In the above-described invention, such a constitution can be employed that the gas ejecting port for ejecting the gas discharged from the inflator outside the module case is joined to a pipe having an opening, which opens outside except for the inside of a vehicle where a passenger exists, at the time of mounting the air bag apparatus to an automobile. This prevents the gas discharged from the inflator from flowing into the inside of a vehicle and adversely affecting a passenger.

In the above-described invention, desirably, the adjusting mechanism for adjusting the opening/closing state of the gas ejecting port in a stepless manner adjusts the opening/closing state of the gas ejecting port in a stepless manner according to one or two or more factors selected from the group consisting of a sitting attitude of a passenger, whether or not a passenger wears a seatbelt, a sitting position of a passenger, the weight of a passenger, an environment temperature and a vehicle speed, thereby adjusting an amount of a gas flowing into the air bag (a maximum pressure at a time of air bag inflation).

Among the above-described factors, for example, there are various sitting attitudes of a passenger on a seat according to his figure or the like, such as siting forward or siting on his rear end. If an air bag is developed with the entirely same inflating pressure in any cases, the passenger sitting forward receives a larger pressure at the time of developing the air bag. Generally, the passenger sitting forward is a person having a small figure such as a woman, and the passenger sitting on his rear end is a man having a large figure. Nonetheless, in the above case, a person having small figure like a woman has to receive a larger pressure. Particularly, when the impact at vehicle collision is small, the air bag does not need to be inflated and developed at maximum, and furthermore, a passenger, in particular, a person having a small figure like a woman may get injured by the impact of the inflating and developing air bag by contraries.

Therefore, in view of the above various factors, the present invention can enhance a protecting performance for a passenger by incorporating sensors, which detects these factors, into the stepless adjusting mechanism.

And, the invention described in claim 7 provides an air bag apparatus provided with a module case accommodating an inflator having a gas discharging port and an air bag inflated by a gas discharged from the gas discharging port of the inflator, and a control circuit connected to the inflator, wherein
a movable coolant means which covers the gas discharging port of the inflator from the outside is disposed inside the module case, and the coolant means is movable to be adjustable in a stepless manner in the range from the state that the movable coolant means covers the gas discharging port completely to the state that the movable coolant means does not cover the gas discharging port. And, the adjusting mechanism in the movable state is activated by an instruction from the control circuit.

This invention is constituted to adjust the maximum inflating pressure of the air bag (the temperature of the gas flowing into the air bag), as the invention described in claim 1, by adjusting the temperature of a gas discharged from the inflator to adjust the temperature of a gas flowing into the air bag. The air bag apparatus of this invention is especially suitable for an air bag apparatus using a pyrotechnic inflator.

In the above-described invention, desirably, the adjusting mechanism of the coolant means in a movable state is of a type movable in the axial direction of the inflator and it comprises a combination of a rack and a pinion.

In the above-described invention, for the same reason as that in the invention described in claim 1, it is desirable that the adjusting mechanism of the coolant means in a movable state adjusts the position of the coolant means in a stepless manner according to one or two or more factors selected from the group consisting of a sitting attitude of a passenger, whether or not a passenger wears a seatbelt, a state of a sitting position of a passenger, the weight of a passenger, an environment temperature and a vehicle speed, thereby adjusting an amount of a gas flowing into the air bag (the maximum pressure at a time of air bag inflation).

Further, the invention described in claim 11 provides an air bag apparatus provided with a module case accommodating an inflator having a gas discharging port and an air bag inflated by a gas discharged from the gas discharging port of the inflator, and a control circuit connected to the inflator, wherein
a movable cap which covers the gas discharging port of the inflator from the outside is disposed inside the module case, the cap is movable to be adjustable in a stepless manner in the range from the state that the cap covers part of the gas discharging port to the state that the cap does not cover the gas discharging port, and the adjusting mechanism in a movable state is activated by an instruction from the control circuit.

This invention is constituted to adjust the maximum inflating pressure of an air bag (the maximum amount of the gas flowing into the air bag), as the invention described in claim 1, by adjusting an amount of a gas discharged from the inflator to adjust an amount of a gas flowing into the air bag.

In the above-described invention, desirably, the adjusting mechanism of the cap in a movable state is of a type movable in the axial direction of the inflator and it comprises a combination of a rack and a pinion.

In the above-described invention, for the same reason as that in the invention described in claim 1, it is desirable that the adjusting mechanism of the cap in a movable state adjusts the opening/closing state of the gas ejecting port in a stepless manner according to one or two or more factors selected from the group consisting of a sitting attitude of a passenger, whether or not a passenger wears a seatbelt, a sitting position of a passenger, a weight of a passenger, an environment temperature and a vehicle speed, thereby adjusting an amount of a gas flowing into the air bag (the maximum pressure at a time of air bag inflation).

The air bag apparatus of the present invention can be applied to any one of a pyrotechnic inflator which utilizes a combustion gas of a gas generating agent to inflate and develop an air bag, a hybrid type inflator which utilizes a combustion gas of a gas generating agent as a booster to inflate and develop an air bag by a pressurized gas such as argon or helium, and an inflator which utilizes both of a combustion gas of a gas generating agent and a pressurized gas to inflate and develop an air bag.

The air bag apparatus of the present invention can be applied to either of a single type inflator having a single igniter and a single combustion chamber (or a single chamber charged with a pressurized gas) and a dual type inflator having two igniters and two combustion chambers (or chambers charged with a pressurized gas).

The air bag apparatuses of the present invention can be applied to various inflators such as an air bag inflator for a driver side, an air bag inflator for a passenger side next to the driver, an air bag inflator for a side collision, an inflator for a curtain air bag, an inflator for a knee-bolster air bag, an inflator for an inflatable seatbelt, an inflator for a tubular system, and an inflator for a pretensioner.

According to the present invention, the maximum pressure at the time of air bag inflation can be finely adjusted according to various factors such as a sitting attitude of a passenger, and thereby, a protecting performance for a passenger at vehicle collision can be enhanced.

### Brief Description of the Drawings

Fig. 1 is a schematic sectional view of an air bag apparatus.
Fig. 2 is a schematic sectional view of an air bag apparatus of another embodiment.
Fig. 3 is a conceptual view for explaining a mounting state of an air bag apparatus to a vehicle.
Fig. 4 is a schematic sectional view of an air bag apparatus of another embodiment.
Fig. 5 is a schematic sectional view of an air bag apparatus of another embodiment.
Fig. 6 is a conceptual view for explaining a mounting state of an air bag apparatus of another embodiment to a vehicle.
Figs. 7 are conceptual views for explaining 60-liter tank test of Example 1.
Fig. 8 is a tank curve obtained by the 60-liter tank test of Example 1.

### Explanation of reference numerals

10, 100, 200, 300 air bag apparatus
12 module case
14 air bag
16 inflator
26 gas discharging port
30 gas ejecting port
34 rack
36 valve body
40 pinion

### Embodiments of the Invention

Respective embodiments will be explained below with reference to the drawings.

### (1) Embodiment 1

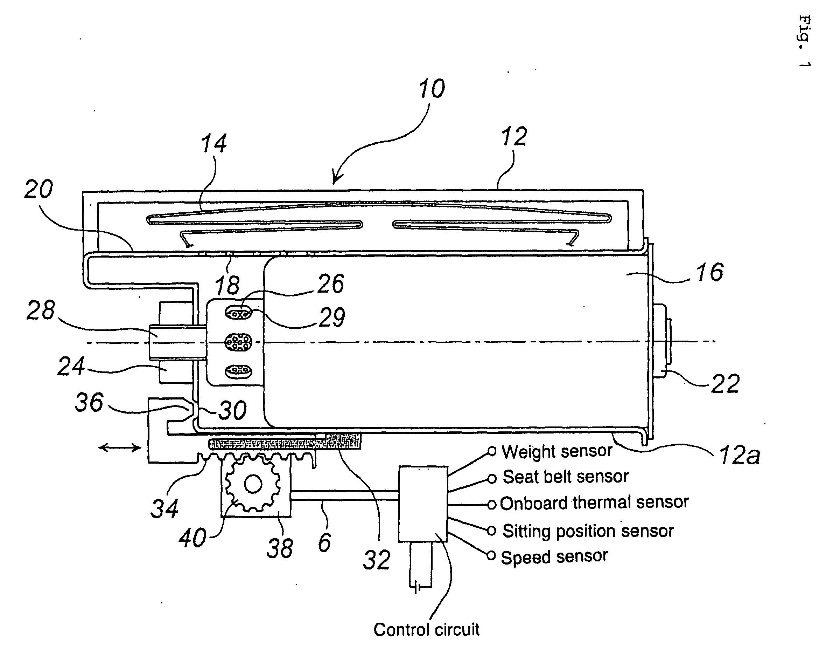

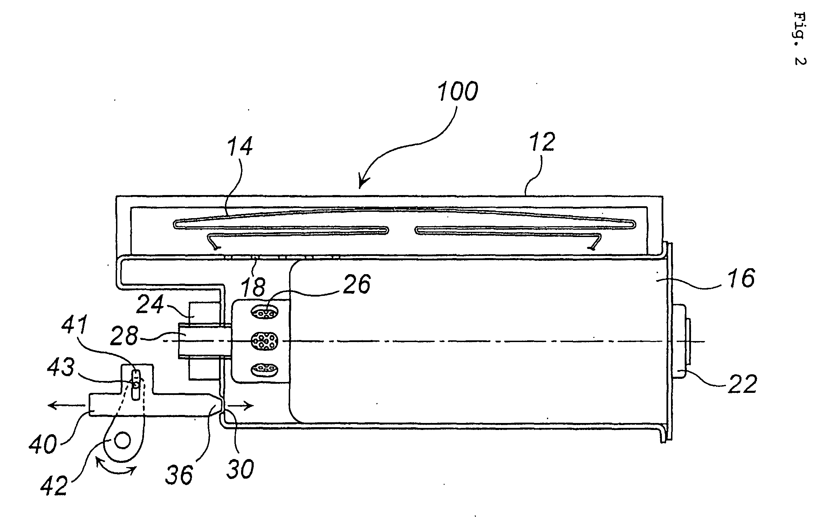

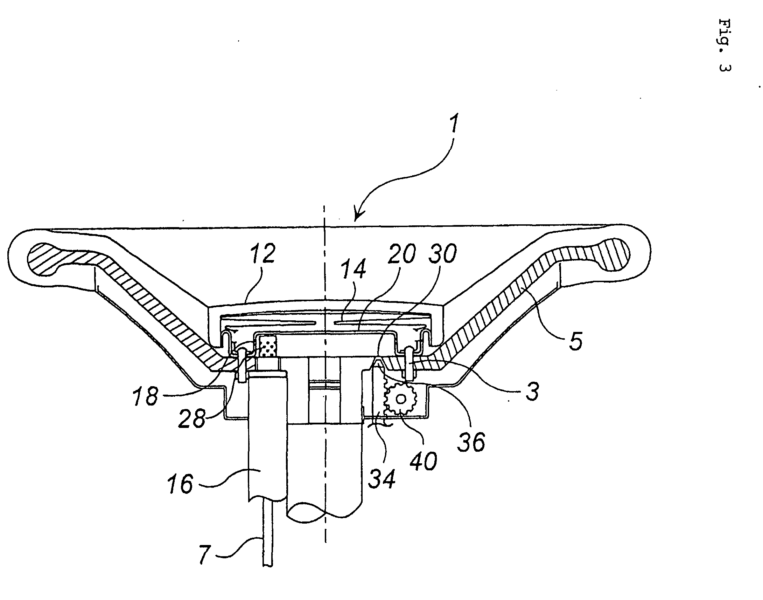

Fig. 1 is a schematic sectional view of an air bag apparatus 10, Fig. 2 is a schematic sectional view of an air bag apparatus 100 of the same embodiment except that the apparatuses 10 and 100 are different in stepless adjusting mechanism, and Fig. 3 is a conceptual view for explaining a state of an air bag apparatus mounted to a vehicle, in which a control circuit is omitted.

As shown in Fig. 1 and Fig. 2, an air bag 14 and an inflator 16 are accommodated in the interior of a module case 12, and a partition wall 20 having gas inflow ports 18 closes between the air bag 14 and the inflator 16. The inflator 16 is fixed, at the axial both ends, to two surfaces of the module case 12 by a bolt 22 and a nut 24.

The inflator 16 has a required number of gas discharging ports 16 and a stud bolt 28 (screwed with the nut 24) integrated with the inflator 16. Reference numeral 29 denotes a filter disposed inside the gas discharging ports 26 to remove foreign materials.

A gas ejecting port 30 for ejecting outside a gas discharged from the gas discharging port 26 of the inflator 16 is provided in the module case 12.

Incidentally, it is desirable that an gas exhaust passage is provided to prevent a gas, which is discharged from the gas ejecting port 30, from flowing in the inside of a vehicle where a passenger exists but to make the gas ejected outside except for the inside of a vehicle where a passenger exists, desirably to the outside of the vehicle.

In Fig. 1, a supporting pole 32 is fixed to one surface 12a of the module case 12, a rack 34 is movably mounted to the supporting pole 32, and a valve body 36 is provided at one end of the rack 34. The valve body 36 has such a shape and a size that can completely close the gas ejecting port 30 to stop ejection of a gas.

A pinion 40 rotating with a motor 38 is disposed at a position to mesh with the rack 34, and the rack 34 reciprocates straight in the arrow directions in the drawing in accordance with a back and forward rotation of the pinion 40.

A combination of the rack 34, the valve body 36, pinion 40 and motor 38 constitutes a stepless adjusting mechanism in the air bag apparatus 10 shown in Fig. 1.

In Fig. 2, a combination of a rod 40 having a valve body 36 at its distal end and a cam 42 is adopted instead of the rack 34 and the pinion 40 in Fig. 1. In this combination, the rod 40 (namely, the valve body 36) 34 reciprocates straight in the axial direction of the inflator 16 by rotating the cam 42 and making a pin 43 move in a slit 41, thereby opening/closing the gas ejecting port 30.

In these stepless adjusting mechanisms, the motor 38 is connected to a control circuit via a lead wire 6, and the control circuit is connected to a power source (a battery in an automobile) and various sensors disposed in respective places in an automobile. A kind of sensor is not limited particularly as long as it serves to obtain a safety for a passenger, and desirably, the sensor can detect one or two or more selected from the group consisting of a sitting attitude of a passenger, whether or not a passenger wears a seatbelt, a sitting position of a passenger, the weight of a passenger, an environment temperature and a vehicle speed.

Next, a mounting state of the air bag apparatus 10 will be explained with reference to Fig. 3. Fig. 3 shows that an air bag apparatus 10 comprising the same operational mechanism as that in the air bag apparatus 10 shown in Fig. 1 is mounted to a driver side. The air bag apparatus shown in Fig. 1 is suitable for one for a passenger side next to a driver, and the apparatus in Fig. 3 is modified to be suitable for a driver side.

A module case 12 is fixed to a central portion of a steering wheel 1, and accommodates an air bag 14 and an inflator 16. A partition wall 20 sectioning the interior of the module case 12 is fixed to a steering wheel frame portion 5 by fastening members 3.

The inflator 16 is connected to a control circuit via two lead wires 7, an unillustrated motor for actuating a pinion 40 is connected to the control circuit by lead wires (reference numeral 6 in Fig. 1), and the control circuit is connected to a power source and various sensors.

Next, an operation of the air bag apparatus 10 shown in Fig. 1 will be explained. Various sensors detect a sitting attitude of a passenger and the like when an automobile mounted with the air bag apparatus 10 is running, and they send information to the control circuit to make a developing mode of the air bag suitable for the sake of a passenger protection. Then, according to an instruction from the control circuit which receives information from various sensors, the motor 38 is actuated to open/close the gas ejecting port 30 in a stepless manner in the range from an opened state to a closed state by a rotation of the pinion 40 and a straight motion of the rack 34.

When a vehicle collides, the igniter inside the inflator 16 is activated according to the instruction from the control circuit, so that a combustion gas of the gas generating agent or the pressurized gas charged in advance is discharged from the gas discharging port 26. The gas flows into the air bag 14 from the gas inflow ports 18 provided in the partition wall 20 to inflate to develop the air bag. At this time, if the gas ejecting port 30 is closed, all the gas is used to inflate and develop the air bag 14. However, if the gas ejecting port 30 is fully or partially opened, only part of the gas inflates and develops the air bag 14.

The relationship between the opened/closed state of the gas ejecting port 30 and the sitting attitude of the passenger or the like is as follows:

### (1) Sitting attitude of a passenger (detected by a sitting position sensor or a weight sensor)

When a passenger such as a woman who is physically small is sitting forward, a distance between the air bag and the passenger is relatively small, so that the maximum inflating pressure of an air bag is suppressed by moving the valve body 36 properly in the direction in which the gas ejecting port 30 is opened.

On the other hand, when a passenger such as a man who is physically large is sitting on his rear end, a distance between the air bag and the passenger is relatively large, so that the maximum inflating pressure of an air bag is increased by moving the valve body 36 properly in the direction in which the gas ejecting port 30 is closed.

### (2) Whether or not a passenger wears a seatbelt (detected by a seatbelt sensor)

When a passenger wears a seatbelt, the passenger is prevented from colliding against the steering wheel or the like because of action of the seatbelt, or even though the passenger collides on the steering wheel, the impact at a time of the collision is reduced. Therefore, the maximum inflating pressure of the air bag is suppressed by moving the valve body 36 properly in the direction in which the gas ejecting port 30 is opened.

On the other hand, when a passenger does not wear a seatbelt, the maximum inflating pressure of the air bag is increased by moving the valve body 36 in the direction in which the gas ejecting port 30 is closed.

### (3) State of a seat position for a passenger (detected by a sitting position sensor)

In view of the same view as the sitting attitude of the passenger, detection is made about a seat position, i.e., whether a seat is moved backward or the seat is moved forward, so that adjustment is conducted.

When the seat is moved forward, the maximum inflating pressure of an air bag is suppressed by moving the valve body 36 properly in the direction in which the gas ejecting port 30 is opened.

On the other hand, when the seat is moved backward, the maximum inflating pressure of an air bag is increased by moving the valve body 36 properly in the direction in which the gas ejecting port 30 is closed.

### (4) Weight of a passenger (detected by a weight sensor)

When the weight of a passenger (mainly, a woman and a child) is light, the maximum inflating pressure of an air bag is suppressed by moving the valve body 36 properly in the direction in which the gas ejecting port 30 is opened.

On the other hand, when the weight of a passenger (mainly, a man) is heavy, the maximum inflating pressure of an air bag is increased by moving the valve body 36 properly in the direction in which the gas ejecting port 30 is closed.

### (5) Environmental temperature (detected by an onboard thermal sensor)

When an environmental temperature is high like in the summer, the temperature in the interior of the inflator also becomes high, and a burning speed of the gas generating agent becomes faster as compared with a season where an environmental temperature is low like in the winter, or the pressure of the pressurized gas charged in the inflator also becomes high, an ejecting speed of the gas from the inflator is expected to be fast.

When the environmental temperature is high, the inflating pressure of an air bag is suppressed by moving the valve body 36 properly in the direction in which the gas ejecting port 30 is opened.

On the other hand, when the environmental temperature is low, the inflating pressure of an air bag is increased by moving the valve body 36 properly in the direction in which the gas ejecting port 30 is closed.

### (6)Vehicle speed (detected by a speed sensor)

When an automobile collides, the slower the vehicle speed is, the smaller an impact to be received becomes. Therefore, when the vehicle speed is slow, the inflating pressure of an air bag is suppressed by moving the valve body 36 properly in the direction in which the gas ejecting port 30 is opened.

On the other hand, the faster the vehicle speed is, the larger an impact to be received becomes. When the vehicle speed is fast, the inflating pressure of an air bag is increased by moving the valve body 36 properly in the direction in which the gas ejecting port 30 is closed.

As described above, by adjusting the opened/closed state of the gas ejecting port 30 provided in the module case 12 in the stepless manner according to various factors such as a sitting attitude of a passenger, the maximum pressure (an amount of a gas flowing into the air bag) at a time of inflation of the air bag can finely be adjusted without changing an output of the inflator 16. For this reason, when a vehicle collides, a passenger can be protected properly from the impact, and additionally, the passenger is prevented from being injured by inflation of the air bag.

### (2) Embodiment 2

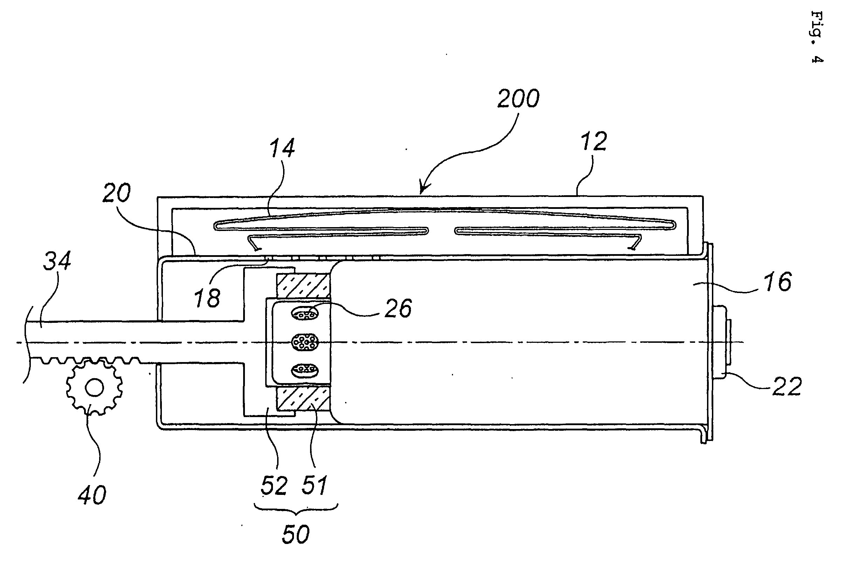

An air bag apparatus will be explained with reference to Fig. 4. Since an air bag apparatus 200 shown in Fig. 4 and the air bag apparatus 10 shown in Fig. 1 are different only in a stepless adjusting mechanism, the other constitution elements of the air bag apparatus 200 are denoted by the same reference numerals as Fig. 1 and an explanation thereof will be omitted.

A movable coolant means 50 covering a gas discharging port 26 of an inflator 16 from the outside is disposed on the inflator 16 side inside the module case 12.

This movable coolant means 50 comprises a cylindrical coolant 51 and a clamp 52 supporting the coolant 51. The coolant 51 comprises a wire mesh, a punching metal, or a laminated body thereof, and it functions to cool a gas temperature without disturbing discharge of the gas.

The coolant 51 reciprocates straight in the axial direction of the inflator 16, interlocked with mesh between a rack 34 formed integrally with the clamp 52 and teeth of a pinion 40 disposed in the vicinity of the rack 34. The pinion 40 rotates by an unillustrated motor.

The unillustrated motor is connected to an unillustrated control circuit, and the control circuit is connected to a power source and various sensors.

The combination of the coolant 51, clamp 52, rack 34, pinion 40 and motor constitutes a stepless adjusting mechanism in the air bag apparatus 200 shown in Fig. 4.

In Fig. 4, since the coolant 51 completely covers the gas discharging port 26, the whole gas, which is discharged from the gas discharging port 26, passes through the entire coolant 51 and the temperature is lowered correspondingly, and then, the gas flows into the air bag 14. If the stepless adjusting mechanism is activated not to make the coolant 51 cover the gas discharging port 26 at all, the gas flows into the air bag 14 without being cooled.

By activating the stepless adjusting mechanism in this manner to make an adjustment in a stepless manner in the range from the state that the gas discharging port 26 of the inflator 16 is completely covered with the coolant 51, to the state that they are not covered at all, the temperature of a gas flowing into the air bag 14 can be adjusted from a relatively low temperature to a high temperature. At this time, the higher the temperature of a gas flowing into the air bag 14 is, the higher the inflating pressure of an air bag becomes, even with the same amount of a gas. Therefore, the stepless adjusting mechanism in this embodiment serves as the same manner as the stepless adjusting mechanism in Embodiment 1.

Accordingly, when a passenger sits forward, when a passenger wears a seatbelt, when the seat position of a passenger is forward, when the weight of a passenger is light, when an environmental temperature is high, and when a vehicle speed is slow, a temperature of a gas flowing into the air bag 14 is lowered by moving the coolant 51 in such a direction as to cover the gas discharging port 26. In the case of the contrary factors, the temperature of a gas flowing into the air bag 14 is not so lowered or is not lowered at all by moving the coolant 51 in such a direction that the gas discharging port 26 is not covered.

### (3) Embodiment 3

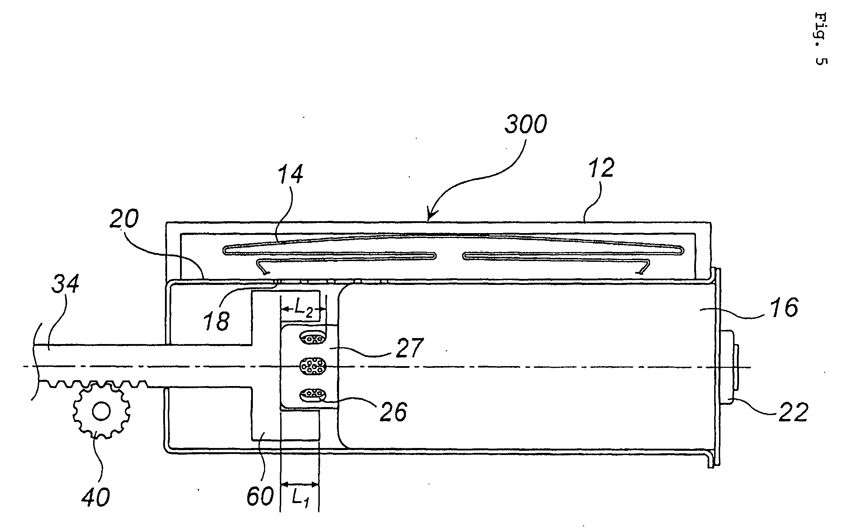

An air bag apparatus 300 will be explained with reference to Fig. 5. Since an air bag apparatus 300 shown in Fig. 5 and the air bag apparatus 10 shown in Fig. 1 are different only in a stepless adjusting mechanism, the other constitution elements are attached with the same reference numerals as those in Fig. 1 and explanation thereof will be omitted.

A movable cap 60 covering gas discharging port 26 of an inflator 16 from the outside is disposed in the inflator 16 side inside the module case 12. Here, a depth L1 of a concave portion of the movable cap 60 and a length L2 from a distal end surface of a diffuser portion 27 to a lower end portion of the gas discharging port 26 are in the relationship of L1 < L2. For this reason, as shown in Fig. 5, even when the movable cap 60 is pressed on to the diffuser portion 27 to its limit, namely, even when the gas discharging port 26 is covered up as much as possible, the gas discharging port 26 is not covered with the cap completely, so that it is opened partially.

The cap 60 reciprocates straight in the axial direction of the inflator 16, interlocked with mesh between a rack 34 formed integrally with the cap 60 and teeth of a pinion 40 disposed in the vicinity of the rack 34. The pinion 40 rotates by an unillustrated motor.

The unillustrated motor is connected to an unillustrated control circuit, and the control circuit is connected to a power source and various sensors.

A combination of the cap 60, rack 34, pinion 40, and motor constitutes a stepless adjusting mechanism in the air bag apparatus 300 shown in Fig. 5.

In Fig. 5, since the cap 60 covers the gas discharging ports 26 as much as possible, a discharged amount per unit time of a gas discharged from the gas discharging ports 26 is reduced, and correspondingly, an inflow amount per unit time of a gas flowing into the air bag 14 is reduced. In particular, in an air bag for a driver side or a passenger side next to the driver, a vent hole for discharging air in an air bag is formed, but when an inflow amount per unit time of a gas flowing into the air bag is reduced, a ratio thereof to an amount of a gas discharged from the vent holes becomes small, so that the maximum inflating pressure of the air bag becomes low. Further, when a gas generated from the inflator has a high temperature, with a small discharge amount per unit time of a gas, it takes much time for discharging the gas, so that the gas is cooled during that time to obtain a similar effect. On the contrary, when the cap 60 does not cover the gas discharging ports 26 at all by activating the stepless adjusting mechanism to move the cap 60 away from the diffuser portion 27, a contrary situation to the above occurs.

By activating the stepless adjusting mechanism in this manner to make adjustment in a stepless manner in the range from the state that the gas discharging port 26 of the inflator 16 is closed as much as possible, to the state that it is not closed at all, the maximum inflating pressure inside the air bag 14 can be adjusted. At this time, the more an amount per unit time of a gas flowing into the air bag 14 is, the higher the maximum inflating pressure of the air bag becomes, and therefore, the adjusting mechanism serves in the same manner as that in Embodiment 1.

Accordingly, when a passenger sits forward, when a passenger wears a seatbelt, when a seat position of a passenger is forward, when the weight of a passenger is light, when an environmental temperature is high, or when a vehicle speed is slow, an amount of a gas flowing into the air bag 14 is reduced by moving the movable cap 60 in the direction in which the gas discharging port 26 is closed. In the case of the contrary factors, an amount of the gas flowing into the air bag 14 is not so reduced or is not reduced at all by moving the movable cap 60 in the direction in which the gas discharging port 26 is opened.

### (4) Embodiment 4

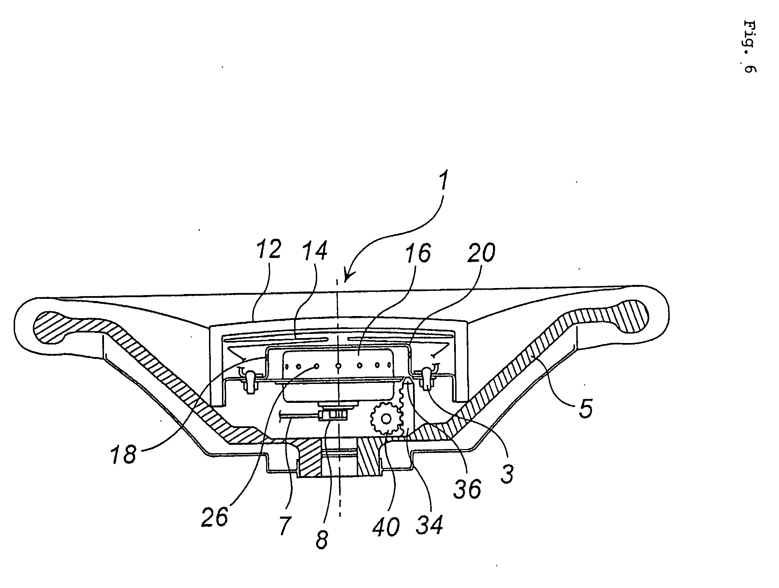

Fig. 6 shows an embodiment having almost the same constitution as that of the embodiment shown in Fig. 1 except that a disk-like inflator 16 is used as the inflator. Reference numeral 8 denotes a connector connected to lead wires 7. And, elements such as a control circuit are omitted in Fig. 6.

### Example

The present invention will be further explained in detail according to the example, but it is not limited to the example.

When an air bag apparatus provided with a stepless adjusting mechanism (the coolant 51, the clamp 52, the rack 34, the pinion 40 and the motor) identical to the inflator (pyrotechnic inflator) shown in Fig. 4 (Embodiment 2) was used to activate the stepless adjusting mechanism, the change of the maximum pressure (a temperature of a gas flowing into an air bag) at inflation of the air bag was measured according to the known 60-liter tank combustion test described in paragraph 11 in JP-b No. 2963086 and paragraph 15 in JP-B No. 2960388.

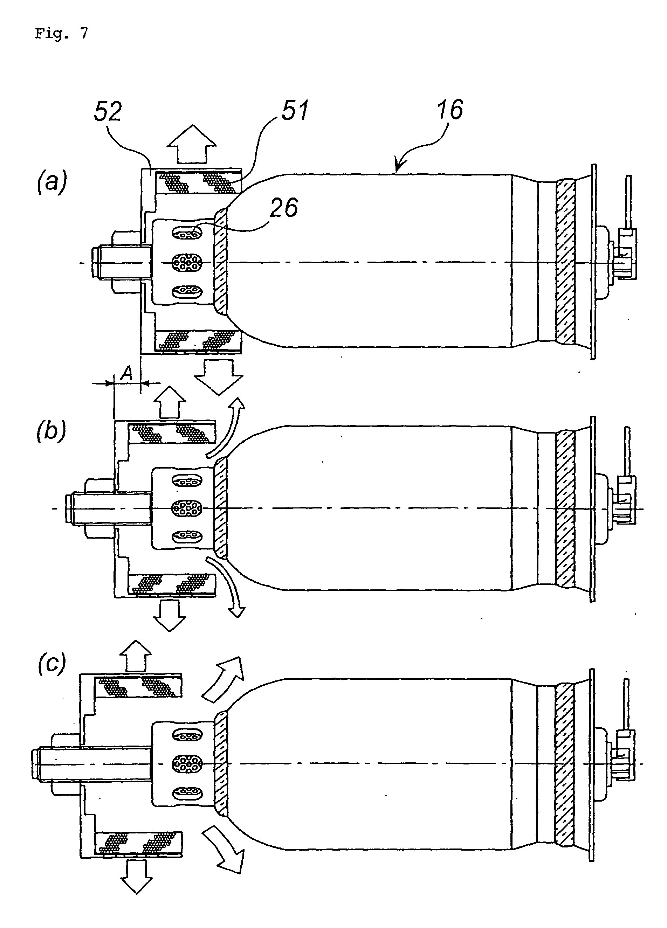

An activation of the stepless adjusting mechanism in the 60-liter tank combustion test will be explained with reference to Fig. 7. In this case, as the coolant 51, one formed by winding an iron wire with a wire diameter of 0.5 mm in a multi-layer (the total mass of 130 g, a thickness of 6.5 mm) was used. Incidentally, in the 60-liter tank test, as shown in Figs. 7 (a) to (c), the inflator 16 was installed in a 60-liter tank and activated while the coolant 51 was mounted to the outside of the gas discharging port 26 of the inflator 16.

In Fig. 7(a), since the stepless adjusting mechanism was not activated, the gas discharging ports 26 of the inflator 16 were completely surrounded by the coolant 51, and the whole amount of a combustion gas was discharged via the coolant 51 to flow into the 60-liter tank. For this reason, the temperature of the combustion gas flowing into the 60-liter tank became low.

In Fig. 7(b), the coolant 51 was moved by the distance A by the activation of the stepless adjusting mechanism. For this reason, part of a combustion gas discharged from the gas discharging ports 26 of the inflator 16 was discharged from a gap between the coolant 51 and the inflator 16, and the remaining gas was discharged via the coolant 51 to flow into the 60-liter tank. Therefore, the temperature of the combustion gas flowing into the 60-liter tank became higher than that in the case of Fig. 7(a).

In Fig. 7(c), the moved distance A of the coolant 51 became longer than that in the case in Fig. 7(b) by activation of the stepless adjusting mechanism. For this reason, the amount of the combustion gas discharged from the gap between the coolant 51 and the inflator 16 was further increased, while the amount of the combustion gas discharged via the coolant 51 was further decreased, so that the temperature of the combustion gas flowing into the 60-liter tank became higher than that in the case of Fig. 7(b).

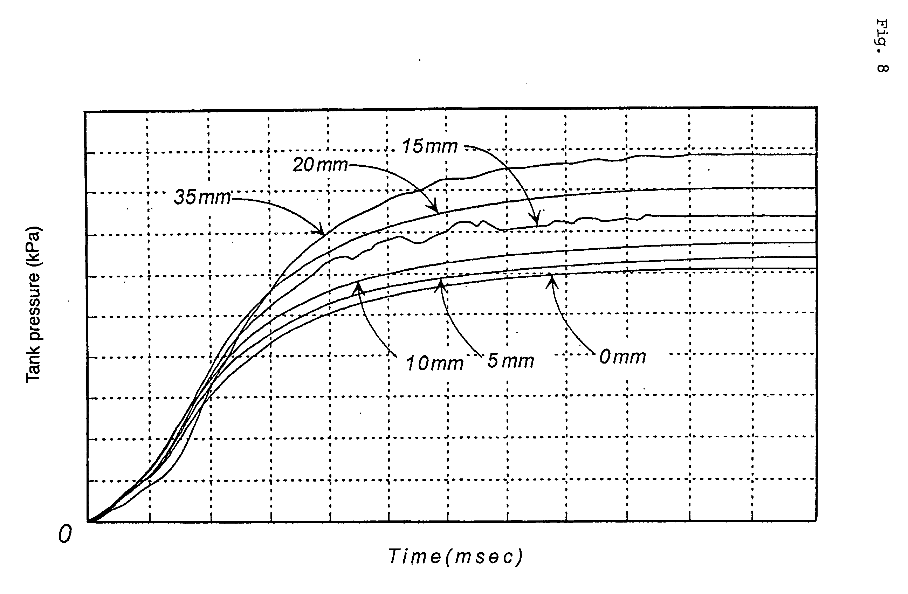

In the 60-liter tank combustion test, the moved distance A were changed to the respective stages of 0 mm (the case shown in Fig. 7(a)), 5 mm, 10 mm, 15 mm, 20 mm and 35 mm, and tank curves were measured in the respective cases. The results are shown in Fig. 8. In this case, the case that the moved distance A of the coolant is 35 mm (not shown) indicates the state that the gas discharging ports 26 are not covered with the coolant 51.

As apparent from the tank curves in Fig. 8, it was confirmed that, as the moved distance A was made larger by activation of the stepless adjusting mechanism, the temperature of the combustion gas flowing into the 60-liter tank became higher, so that the maximum pressure inside the 60-liter tank was raised. Accordingly, in an air bag apparatus in which the inflator 16 of the present invention was attached to an air bag, the maximum internal pressure (a developing pressure) inside the air bag can be adjusted in a stepless manner, and the maximum pressure at inflation of an air bag can finely be adjusted corresponding to various factors such as a sitting attitude of a passenger or the like.

## Claims

1. An air bag apparatus provided with a module case accommodating an inflator having a gas discharging port and an air bag inflated by a gas discharged from the inflator, and a control circuit connected to the inflator, wherein
the module case is provided with a gas ejecting port for ejecting a gas discharged from the gas discharging port of the inflator outside the module case and an adjusting mechanism for adjusting an opening/closing state of the gas ejecting port in a stepless manner, and the adjusting mechanism can be activated by an instruction from the control circuit.

2. An air bag apparatus according to claim 1, wherein the adjusting mechanism for adjusting an opening/closing state of the gas ejecting port in a stepless manner comprises a combination of the gas ejecting port and a valve body opening and closing the gas ejecting port.

3. An air bag apparatus according to claim 2, wherein the valve body moves vertically to a plane of the gas ejecting port, the valve body moves in parallel to a plane of the gas ejecting port, or the valve body rotates around the bar provided over a plane of the gas ejecting port.

4. An air bag apparatus according to claim 2 or 3, wherein the valve body opens/closes the port by a combination of a rack and a pinion.

5. An air bag apparatus according to any one of claims 1 to 4, wherein the gas ejecting port for ejecting a gas discharged from the inflator outside the module case is joined to a pipe having an opening, which opens outside except for the inside of a vehicle where a passenger exists, at the time of mounting the air bag apparatus to an automobile.

6. An air bag apparatus according to any one of claims 1 to 5, wherein the adjusting mechanism for adjusting the opening/closing state of the gas ejecting port in a stepless manner adjusts the opening/closing state of the gas ejecting port in a stepless manner according to one or two or more factors selected from the group consisting of a sitting attitude of a passenger, whether or not a passenger wears a seatbelt, a sitting position of a passenger, the weight of a passenger, an environment temperature and a vehicle speed, and an amount of a gas flowing into the air bag is adjusted.

7. An air bag apparatus provided with a module case accommodating an inflator having a gas discharging port and an air bag inflated by a gas discharged from the gas discharging port of the inflator, and a control circuit connected to the inflator, wherein
a movable coolant means which covers the gas discharging port of the inflator from the outside is disposed inside the module case, the coolant means is movable to be adjustable in a stepless manner in the range from the state that the movable coolant means covers the gas discharging port completely to the state that the movable coolant means does not cover the gas discharging port, and the adjusting mechanism in the movable state is activated by an instruction from the control circuit.

8. An air bag apparatus according to claim 7, wherein the adjusting mechanism of the coolant means in a movable state is movable in the axial direction of the inflator.

9. An air bag apparatus according to claim 7 or 8, wherein the adjusting mechanism of the coolant means in a movable state comprises a combination of a rack and a pinion.

10. An air bag apparatus according to any one of claims 7 to 9, wherein the adjusting mechanism of the coolant means in a movable state adjusts a position of the coolant means in a stepless manner according to one or two or more factors selected from the group consisting of a sitting attitude of a passenger, whether or not a passenger wears a seatbelt, a sitting position of a passenger, the weight of a passenger, an environment temperature and a vehicle speed, and temperature of a gas flowing into the air bag is adjusted.

11. An air bag apparatus provided with a module case accommodating an inflator having a gas discharging port and an air bag inflated by a gas discharged from the gas discharging port of the inflator, and a control circuit connected to the inflator, wherein
a movable cap which covers the gas discharging port of the inflator from the outside is disposed inside the module case, the cap is movable to be adjustable in a stepless manner in the range from the state that the cap covers part of the gas discharging port to the state that the cap does not cover the gas discharging port, and the adjusting mechanism in a movable state is activated by an instruction from the control circuit.

12. An air bag apparatus according to claim 11, wherein the adjusting mechanism of the cap in a movable state is movable in the axial direction of the inflator.

13. An air bag apparatus according to claim 11 or 12, wherein the adjusting mechanism of the cap in a movable state comprises a combination of a rack and a pinion.

14. An air bag apparatus according to any one of claims 11 to 13, wherein the adjusting mechanism of the cap in a movable state adjusts an opening/closing state of the gas ejecting port in a stepless manner according to one or two or more factors selected from the group consisting of a sitting attitude of a passenger, whether or not a passenger wears a seatbelt, a sitting position of a passenger, the weight of a passenger, an environment temperature and a vehicle speed, and an amount of a gas flowing into the air bag is adjusted.
